Europäisches Patentamt

European Patent Office

Office européen des brevets

(11) Publication number: 0 351 146 A2

# EUROPEAN PATENT APPLICATION

(21) Application number: 89306911.2

(22) Date of filing: 07.07.89

(51) Int. Cl.⁴: B62D 7/00

(30) Priority: 15.07.88 GB 8816857

(43) Date of publication of application:
17.01.90 Bulletin 90/03

(84) Designated Contracting States:
DE FR GB IT SE

(71) Applicant: JAGUAR CARS LIMITED
Browns Lane
Allesley Coventry CV5 9DR West
Midlands(GB)

(72) Inventor: Petersen, Andrew
15 Kemps Green Road
Balsall Common Coventry CV7 7QE(GB)
Inventor: Randall, Steven James
27 Oak Close
Baginton Coventry CV8 3LE(GB)

(74) Representative: Cundy, Anthony Brian et al
Anthony Cundy & Company 384 Station
Road Dorridge
Solihull West Midlands B93 8ES(GB)

(54) Steer angle adjusting for a vehicle.

(57) A steer angle adjusting apparatus for a vehicle comprises a steering control member (14) including steering control means (19) movable in an axial direction of the steering control member and means to superimpose an adjustment on the steer angle of the vehicle. The adjusting means comprises a mount (13) which permits repeated limited translational movement of the steering control member in the axial direction thereof relative to the vehicle, and means (15,16,17) for controlling translational movement of the steering control member.

EP 0 351 146 A2

FIG 4

## STEER ANGLE ADJUSTING APPARATUS FOR A VEHICLE

The present invention relates to a steer angle adjusting apparatus for a vehicle.

While it is usual to steer only the front wheels of a vehicle it is becoming more common to steer both the front and rear wheels with the rear wheels being turned in the same sense as the front wheels for small steering angles and being turned in the opposite sense for large steering angles. It is also known to superimpose on the steering angle a course correction or adjustment which responds to external forces such as wind gusts or road irregularities. However, these known adjustments to vehicle steering are either mechanically complex or are built into power steering apparatus of the vehicle and can prejudice the safety of the vehicle in the event of failure.

It is an object of the present invention to provide a steer angle adjusting apparatus for a vehicle that is simple to install and which does not prejudice the safety of the vehicle.

According to the present invention there is provided a steer angle adjusting apparatus for a vehicle, comprising a steering control member including steering control means movable in an axial direction of the steering control member, wherein the steering control member is mounted on the vehicle by means which permit repeated limited translational movement of the steering control member in the axial direction thereof relative to the vehicle, and means is provided for controlling translational movement of the steering control member so as to superimpose on the steer angle of the vehicle an adjustment determined by the relative position of the steering control member.

Preferably, the steering control member is mounted on the vehicle by way of compliant mounts. The compliant mounts may each comprise a rubber bush having a high radial stiffness and a low axial stiffness.

Actuating means for effecting the translational movement of the steering control member is preferably mounted securely on the vehicle. Connecting means for connecting the actuating means to the steering control member may incorporate a compliant mount.

In an alternative embodiment, the steering control member is mounted on the movable member by way of compliant mounts.

Preferably, the superimposed translational movement has an amplitude of about 15mm.

At least one transducer may be provided to supply data to a control unit which determines the amplitude of superimposed translational movement to be applied to the steering control member. The transducer may sense, for example, one or more of

: the steering angle selected by the driver of the vehicle, lateral acceleration, yaw acceleration, yaw rate, vehicle speed and suspension disposition.

The vehicle may incorporate steer angle adjusting apparatus on either or both of the front and rear wheels.

For a better understanding of the present invention and to show more clearly how it may be carried into effect reference will now be made by way of example to the accompanying drawings in which:

Figure 1 is a diagrammatic illustration of one embodiment of the steer angle adjusting apparatus according to the present invention;

Figure 2 is a perspective illustration of a part of a vehicle incorporating a steer angle adjusting apparatus according to the present invention, a steering rack of the vehicle being omitted for clarity;

Figure 3 is a plan view from above of the vehicle part incorporating a steer angle adjusting apparatus corresponding to Figure 2; and

Figure 4 is a simplified plan view from above corresponding to Figure 3 but incorporating a steering rack.

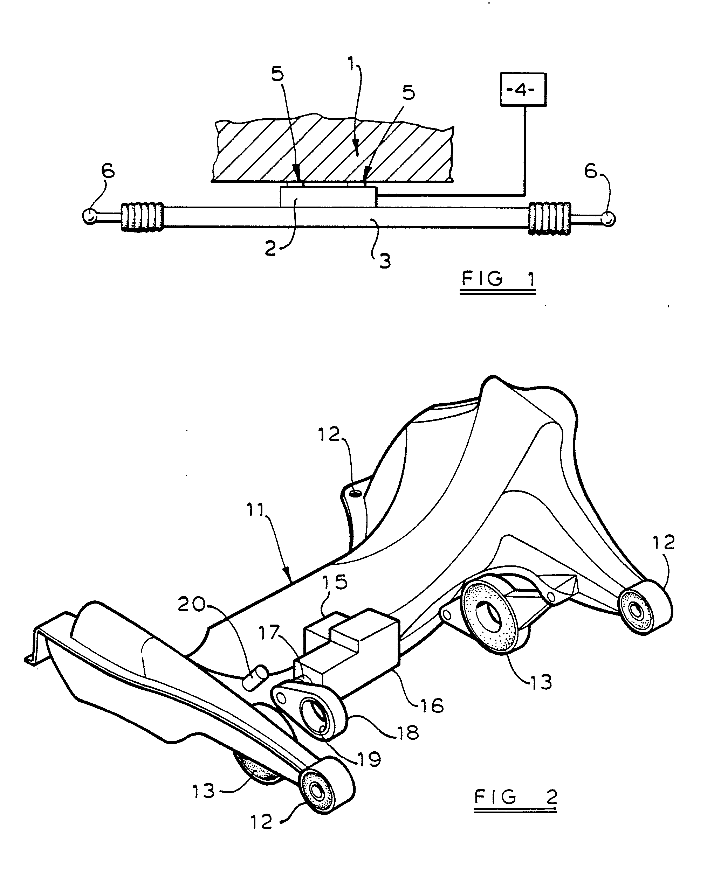

Figure 1 shows a part 1 of a vehicle chassis or subframe to which there is attached a movable member or bed 2 which is itself secured in a generally non-movable manner to a steering control member such as a steering rack 3, including steering control means in the form of track rod ends 6, by means of compliant mounts 5 carried on the bed. The movable bed 2 is mounted on the vehicle chassis or subframe in a manner which permits repeated limited lateral translational movement in the axial direction of the steering rack by a few millimetres so as to produce an adjustment superimposed on the steering angle selected by the driver of the vehicle. Lateral movement of the bed 2 can be determined by any convenient means such as electrical or hydraulic drives. Control of the movement of the bed 2 is effected by a control unit 4 which may incorporate a microprocessor and which receives inputs from transducers positioned around the vehicle and measuring, for example, the steering angle selected by the driver, lateral and yaw accelerations of the vehicle, yaw rate, vehicle speed and data relating to the suspension system of the vehicle.

It should be noted that the steering effect of the lateral movement of the bed 2 is small relative to the steering effect that can be produced by the driver of the vehicle. This ensures that should the controller 4 cease to function or develop a fault the driver will be able to retain control of the vehicle. A particular advantage of the present arrangement is that the control system is separate from the driver's input and it not incorporated, for example, in any power steering apparatus.

The steer angle adjusting apparatus shown in Figures 2 to 4 is mounted on a front subframe 11 of a vehicle which is mounted to a vehicle body (not shown) by means of mounting points 12. Secured to the subframe 11 in a non-movable manner are two compliant mounts 13 which take the form of rubber bushes which exhibit high radial stiffness (low compliance) combined with low axial stiffness (high compliance). An alternative mounting system could incorporate a linear slide arrangement.

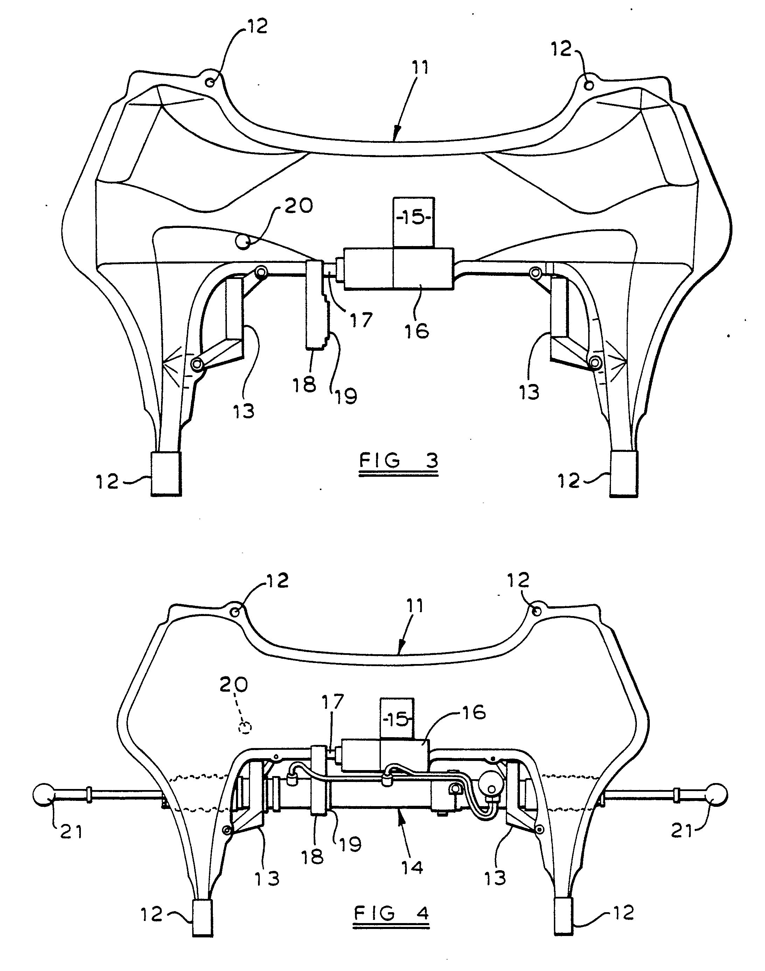

Figure 4 shows a steering control member in the form of a steering rack 14 mounted in the compliant mounts 13 so as to be movable axially as a result of axial compliance of the mounts but substantially immovable radially. Steering rack 14 is conventional and in the illustrated emboidment is a power steering assembly.

Also mounted in a non-movable manner on the subframe 11 are a control unit 15 and a proportional valve and cylinder assembly 16 which operates to move an operating rod 17 backwards and forwards in an axial direction. The valve and cylinder assembly 16 incorporates a fail-safe device (not shown) which inhibits axial movement of the operating rod 17 in the event of any failure in the steer angle adjusting apparatus.

Operating rod 17 is connected to steering rack 14 by connecting member 18 which incorporates a compliant mount 19 to reduce harshness in the effect of the steer angle adjusting apparatus, but having a lower axial compliance than the mounts 13.

Operating rod 17 is able to superimpose an additional movement of about 15mm amplitude on the movement normally available at track rod ends 21.

Control of the valve and cylinder assembly by the control unit 15 is determined as a result of transducers, such as transducer 20, positioned around the vehicle as described above.

The apparatus shown in the figures can be applied to either the front wheels or the rear wheels of the vehicle, or can be applied to both the front and rear wheels. In addition to improving low-speed manoeuverability and improving handling during high-speed lane-changing manoeuvres which are known from prior art apparatus, it is also possible to provide faster turn-in while cornering and to improve high-speed stability and compensate for unwanted steering inputs such as bump steer and roll steer. The provision of active steering control on both the front and rear wheels can also result in reduced response to lateral wind gusts and can improve handling when adhesion limits are reached on one or more of the wheels.

## Claims

1. A steer angle adjusting apparatus for a vehicle, comprising a steering control member (3;14) including steering control means (6;19) movable in an axial direction of the steering control member characterised in that the steering control member is mounted on the vehicle by means (5;13) which permits repeated limited translational movement of the steering control member in the axial direction thereof relative to the vehicle, and means (2,4;15,16,17) is provided for controlling translational movement of the steering control member so as to superimpose on the steer angle of the vehicle an adjustment determined by the relative position of the steering control member.

2. A steer angle adjusting apparatus as claimed in claim 1, characterised in that the steering control member (14) is mounted on the vehicle by way of compliant mounts (13).

3. A steer angle adjusting apparatus as claimed in claim 2, characterised in that the compliant mounts (13) each comprise a rubber bush having a high radial stiffness and a low axial stiffness.

4. A steer angle adjusting apparatus as claimed in claim 1,2 or 3, characterised in that actuating means (16,17) for effecting the translational movement of the steering control member (16,17) is mounted securely on the vehicle.

5. A steer angle adjusting apparatus as claimed in claim 4, characterised in that connecting means (18) for connecting the actuating means (16,17) to the steering control member (14) incorporates a compliant mount (19).

6. A steer angle adjusting apparatus as claimed in claim 1, characterised in that the steering control member (3) is mounted on the movable member by way of compliant mounts (5).

7. A steer angle adjusting apparatus as claimed in any preceding claim, characterised in that the superimposed translational movement has an amplitude of about 15mm.

8. A steer angle adjusting apparatus as claimed in any preceding claim, characterised in that at least one transducer (20) is provided to supply data to the control means (4;15) which determines the amplitude of superimposed translational movement to be applied to the steering control member (3;14).

FIG 1

FIG 2

FIG 3

FIG 4